(19) Europäisches Patentamt

European Patent Office

Office européen des brevets

(11) EP 0 933 621 B1

(12) FASCICULE DE BREVET EUROPEEN

(45) Date de publication et mention
de la délivrance du brevet:
**29.09.2004 Bulletin 2004/40**

(51) Int Cl.⁷: **G01G 19/415**, G01F 17/00

(21) Numéro de dépôt: **99400179.0**

(22) Date de dépôt: **26.01.1999**

(54) **Système de mesure des caractéristiques d'un objet volumineux**

System zur Messung der Charakteristika eines voluminösen Gegenstandes

System for measuring the characteristics of a voluminous object

(84) Etats contractants désignés:
**BE DE ES GB IT NL SE**

(30) Priorité: **29.01.1998 FR 9800989**

(43) Date de publication de la demande:
**04.08.1999 Bulletin 1999/31**

(73) Titulaire: **European Aeronautic Defence and Space Company - EADS France**
**75016 Paris (FR)**

(72) Inventeurs:
- **Goninet, Michèle**
  **18000 Bourges (FR)**
- **Bourgoin, Jean-Pierre**
  **18000 Bourges (FR)**
- **Cuny, Isabelle**
  **18570 Morthomiers (FR)**
- **Baudrier, David**
  **18130 Jussy-Champagne (FR)**

(74) Mandataire: **Poulin, Gérard et al**
**BREVALEX**
**3, rue du Docteur Lancereaux**
**75008 Paris (FR)**

(56) Documents cités:
EP-A- 0 843 153          WO-A-93/01467
WO-A-95/30132          WO-A-98/40704
DE-A- 19 545 845          US-A- 5 331 118

- **"Parts-input station system" IBM TECHNICAL DISCLOSURE BULLETIN, vol. 28, no. 2, juillet 1985, pages 498-499, XP002078386 NEW YORK US**

EP 0 933 621 B1

**Description**

<u>Domaine technique</u>

La présente invention concerne un système de mesure des caractéristiques d'un objet volumineux.
Le domaine de l'invention est celui de la mesure rapide et précise des caractéristiques d'un objet volumineux, par exemple une palette constituée, et notamment de la mesure des trois dimensions englobantes de celui-ci.

<u>Etat de la technique antérieure</u>

Dans le domaine de l'invention ainsi défini, il existe de nombreuses publications, et notamment :

- un document référencé [1] en fin de description qui décrit un système de mesure de surfaces à trois dimensions devant être représentées mathématiquement. Ce système comprend une machine permettant la mesure d'une surface à trois dimensions, des dispositifs optiques destinés à générer une image de ladite surface, ces dispositifs optiques pouvant être déplacés et orientés, et des dispositifs de traitement reliés aux dispositifs optiques et destinés à déterminer les coordonnées de points de surface à mesurer ;
- un document référencé [2] qui décrit un procédé et un dispositif de mesure tridimensionnelle destinés à la mesure rapide et précise d'objets de grande dimension, tels que véhicules. Ce procédé comprend les étapes de détermination approximative des positions de mesure d'un capteur de mesure de forme, de positionnement du capteur successivement aux positions de mesure pour relever la forme de portions superficielles de l'objet, les portions superficielles étant représentées par des points de l'objet dont les coordonnées sont exprimées dans un référentiel lié au capteur, de repérage précis des positions du capteur aux positions déterminées approximativement, dans un référentiel fixe prédéterminé, et de transformation des coordonnées de points de portions superficielles exprimées dans le repère lié au capteur en des coordonnées exprimées dans le référentiel fixe en fonction des positions repérées du capteur.

Mais les systèmes décrits dans ces demandes de brevet présentent de nombreux inconvénients. Ainsi la première demande décrit un système qui utilise des capteurs de détection tactile, et décrit un procédé de mesure compliqué à mettre en oeuvre. La seconde demande décrit un système qui utilise des transducteurs à ultrasons qui peuvent être perturbés par le milieu industriel ambiant, et un procédé de mesure complexe à mettre en oeuvre.
En ce qui concerne le système de l'invention, l'environnement de celui-ci peut présenter, en effet, des contraintes importantes :

- température de -15°C à +50°C ;
- humidité relative de presque 100 % dans certaines conditions d'utilisation ;
- protection du réseau électrique pouvant être très perturbé par de gros moteurs de manutentions.

L'invention a pour objet de simplifier les systèmes de l'art antérieur en permettant notamment d'identifier un objet volumineux, en une seule opération, par ses poids, volume et code-barres, en vue par exemple de son stockage.

<u>Exposé de l'invention</u>

L'invention propose un système de mesure de caractéristiques d'un objet volumineux, caractérisé en ce qu'il comprend :

- au moins un ensemble de mesure constitué de :

  . une balance de pesée, munie d'un plateau horizontal, disposée dans une zone de mesure,
  . un télémètre ultrasonore et une caméra fixés sur un support, dirigés vers l'espace situé au-dessus du plateau de la balance,
  . une unité de signalisation du mode fonctionnement ;

- un organe de traitement relié à ces différents éléments et à au moins un organe d'entrée d'informations et à au moins un organe de visualisation.

De plus la balance est encastrée dans le sol, et le support est un rail sur lequel est fixée une platine, supportant la caméra et le télémètre ultrasonore, qui peut se déplacer sur le rail.

Avantageusement le système de l'invention comprend, dans chaque ensemble de mesure :

- un boîtier interface, disposé entre d'une part l'organe de traitement et d'autre part la balance, le télémètre ultrasonore et l'unité de signalisation, et qui permet de piloter ces trois élément ;
- un afficheur avec touches de fonction auquel sont connectés un lecteur code-barres et une imprimante ;
- une télécommande pour déclencher les mesures.

Le système de l'invention permet :

- une identification objet par code-barres ;
- une mesure du poids par une balance spécifique aux objets volumineux (jusqu'à plusieurs tonnes) ;
- une mesure de volume à l'aide d'un télémètre ultrasonore et d'un système vidéo ;

  en utilisant :

- un télémètre ultrasonore qui permet de mesurer la hauteur de l'objet ;
- un système vidéo qui comprend une caméra monochrome et une carte d'acquisition de type « Meteor » de la société Matrox® (Matrox® est une marque déposée de Matrox Electronic Systems Ltd.).

Ce système permet de mesurer la surface de la face supérieure de l'objet. La surface réelle de l'objet est obtenue par un calcul de correction fonction de la hauteur.

Le système est piloté par un système informatique adapté et par un logiciel spécifique.

Le système de l'invention est un système peu encombrant qui effectue la mesure du volume sans déplacement de l'objet. Il est adapté à des milieux où la circulation en machine et en personnel est importante (par exemple un quai de déchargement).

Le télémètre ultrasonore mesure la hauteur de l'objet le plus haut situé dans un cône. La mesure s'effectue donc dans une zone circulaire large, contrairement à un télémètre laser où la mesure est ponctuelle.

L'intérêt de l'invention est de pouvoir mesurer des poids et volumes importants, sans déplacement de l'objet à mesurer, et de pouvoir s'intégrer dans n'importe quel site du fait de son faible encombrement, de sa facilité d'installation et de sa non-perturbation sur l'environnement extérieur.

Tous les appareils de mesure sont connectés à un système informatique de commande, ce qui permet d'effectuer l'ensemble des mesures pendant un même cycle d'acquisition.

Il est, de plus, possible de relier jusqu'à quatre ensembles de mesure au même système informatique, qui traite et centralise l'ensemble des données, Chaque ensemble se comportant indépendamment des autres.

Les domaines d'application du système de l'invention sont nombreux ; ce sont par exemple :

- la prestation de services logistiques (gestion de stock, stockage, manutention, entrepôts, ...) ;
- la préparation de commandes ;
- le contrôle et mesure, métrologie, calibrage.

Brève description des dessins

- La figure 1 illustre le système de l'invention ;
- la figure 2 illustre une configuration monoposte du système de l'invention ;
- la figure 3 illustre une configuration multiposte du système de l'invention ;
- les figures 4A et 4B d'une part, et 5A et 5B d'autre part illustrent deux organigrammes de fonctionnement du système de l'invention, le premier illustrant le fonctionnement général, le second la succession des mesures effectuées.

Exposé détaillé de modes de réalisation

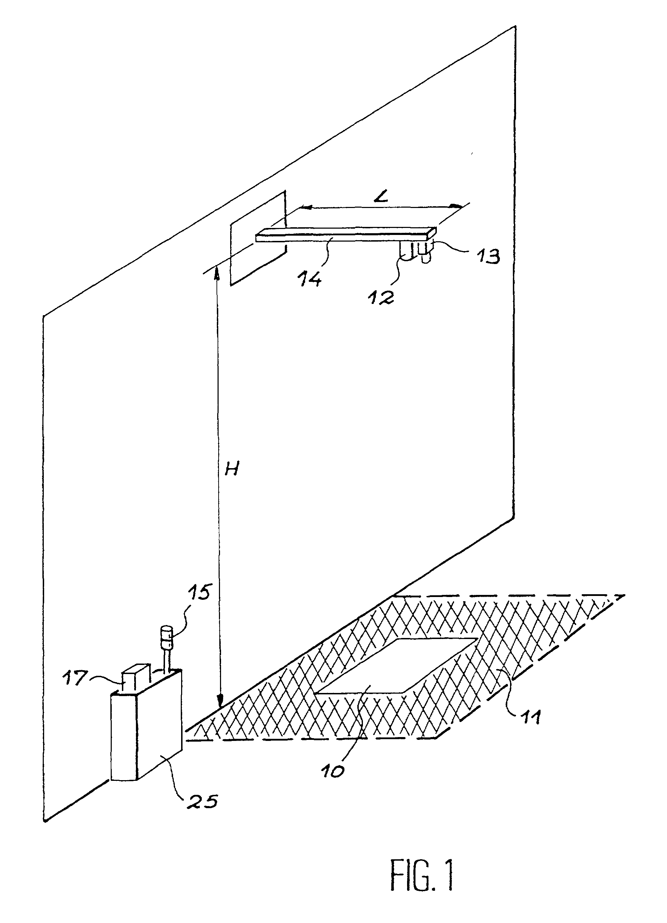

Le système de l'invention, illustré sur la figure 1, comprend :

- au moins un ensemble de mesure constitué de :

  . une balance de pesée 10 munie d'un plateau horizontal, disposée dans une zone de mesure 11, et qui peut être encastrée dans le sol pour que son plateau affleure le sol,

. un télémètre ultrasonore 12 et une caméra 13 fixés sur un support 14, dirigés vers l'espace situé au-dessus du plateau de la balance 10,

. une unité de signalisation 15 du mode fonctionnement ;

- un organe de traitement 16 relié à ces différents éléments et à au moins un organe d'entrée d'information et à au moins un organe de visualisation 17.

Avantageusement le système de l'invention comprend dans chaque ensemble de mesure :

- un boîtier interface 18, disposé entre d'une part l'organe de traitement 16 et d'autre part la balance 10, le télémètre ultrasonore 12, et l'unité de signalisation 15, qui permet de piloter ces trois éléments ;
- un afficheur 17 avec touches de fonction auquel sont connectés un lecteur code-barres 19 et une imprimante 21 ;
- une télécommande pour déclencher les mesures.

L'armoire électrique 25, illustrée sur la figure 1, contient :

- l'unité centrale informatique 16 ;
- le boîtier de commande du télémètre 12 ;
- l'unité de commande de la balance 10 ;
- le boîtier interface 18 ;
- le système électrique.

La figure 1 illustre l'installation du support 14 de la caméra 13 et du télémètre ultrasonore 12. Le support est, par exemple, un rail sur lequel est fixée une platine supportant la caméra 13 et le télémètre 12. Le réglage de la longueur L se fait en déplaçant la platine sur le rail. De plus, la platine est munie de niveaux et de vis de réglage qui permettent d'assurer l'horizontalité et la verticalité de la caméra 13 et du télémètre 12.

La balance 10 est placée à l'aplomb de ces deux appareils 12 et 13, la zone de mesure 11 étant délimitée soit par une barrière, soit par un rectangle peint au sol. Le système informatique est placé à proximité (ici dans l'armoire 25), en dehors de cette zone de mesure.

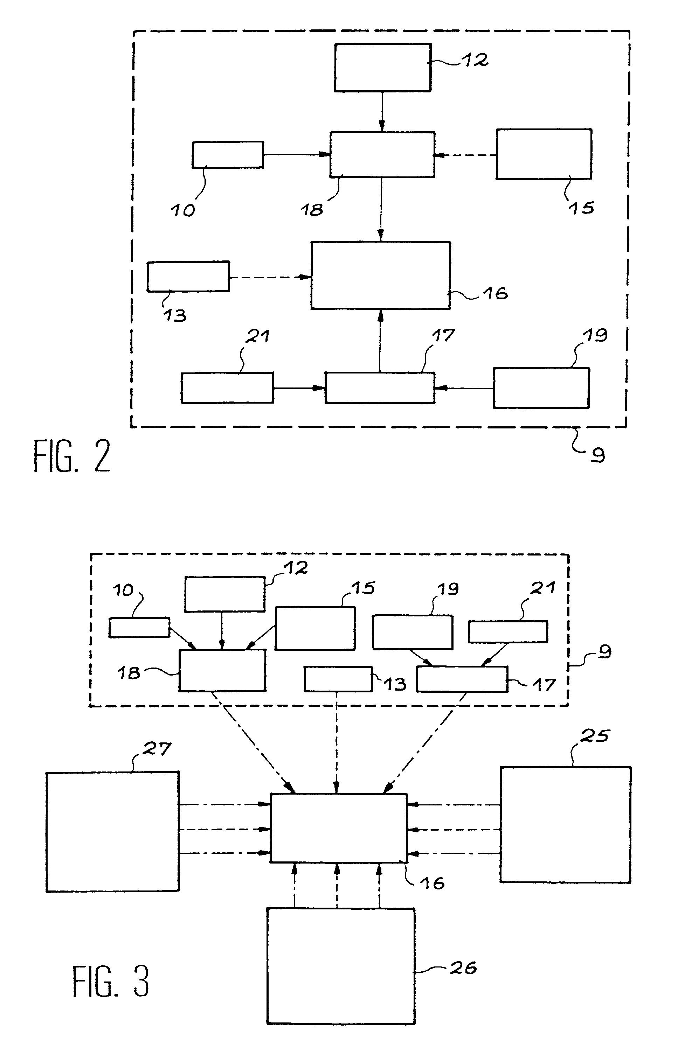

La configuration, illustrée sur les figures 1 et 2 est une configuration monoposte qui est la configuration de base. Elle est constituée d'un ensemble de mesure qui comprend, par exemple :

- une caméra, par exemple de type CCD monochrome avec un objectif à focale variable 6-12 mm ;
- un télémètre ultrasonore composé d'un transducteur et d'un boîtier de commande ;
- une balance avec son unité de commande ;
- deux lampes de signalisation de couleurs rouge et verte ;
- une boîte interface qui permet de piloter le télémètre, la balance et la signalisation lumineuse ;
- un lecteur code-barres ;
- une imprimante qui fournit un ticket avec les informations nécessaires ;
- un afficheur avec touches de fonction auquel est connecté le lecteur code-barres et l'imprimante ;
- une télécommande pour déclencher les mesures ;
- une unité centrale informatique, à laquelle sont reliés la caméra, la boîte interface et l'afficheur, qui pilote l'ensemble. Cette unité peut être équipée :

  . d'un processeur Intel Pentium à 166 Mhz,
  . de 32 mégaoctets de mémoire vive,
  . d'un disque dur de 2 gigaoctets,
  . d'un lecteur de disquette 3'1/2 - 1,44 mégaoctets,
  . d'une carte d'acquisition vidéo par exemple de type MATROX METEOR™ (MATROX METEOR™ est une marque de Matrox Electronic Systems Ltd.) à laquelle se connecte la caméra.

Cette configuration est une configuration de base où l'interface entre l'homme et le système se fait par l'intermédiaire d'un afficheur équipé de touches de fonction. Si l'utilisateur désire une interface graphique, l'afficheur est remplacé par un écran, un clavier et une souris. De même il est possible de relier un écran tactile, ce qui élimine l'utilisation de la souris.

La figure 2 illustre un schéma des connexions entre l'unité centrale et l'ensemble de mesure d'une telle configuration. Les liaisons représentées en traits pleins sont de type RS232 ; les liaisons représentées en tiretés sont de type liaisons spécialisées.

Le système de l'invention remplit les fonctions suivantes :

- mesure de la hauteur de l'objet par le télémètre ultrasonore ;
- mesure de la surface de la face supérieure de l'objet par la caméra ;
- mesure du poids par la balance ;
- identification de l'objet par lecture code-barres grâce à un lecteur correspondant.

En fonctionnement on peut avoir le mode opératoire suivant :

- identification de l'objet par lecture code-barres en dehors de la zone de mesure ;
- dépose de l'objet sur la balance ;
- retrait des personnes et des moyens de transport de la zone de mesure ;
- signalisation rouge pour interdire l'accès à la zone de mesure ;
- mesure du poids ;
- mesure de la hauteur ;
- mesure de la surface ;
- calcul du volume ;
- affichage des résultats ;
- passage de la signalisation au vert pour autoriser l'accès à la zone de mesure ;
- reprise de l'objet.

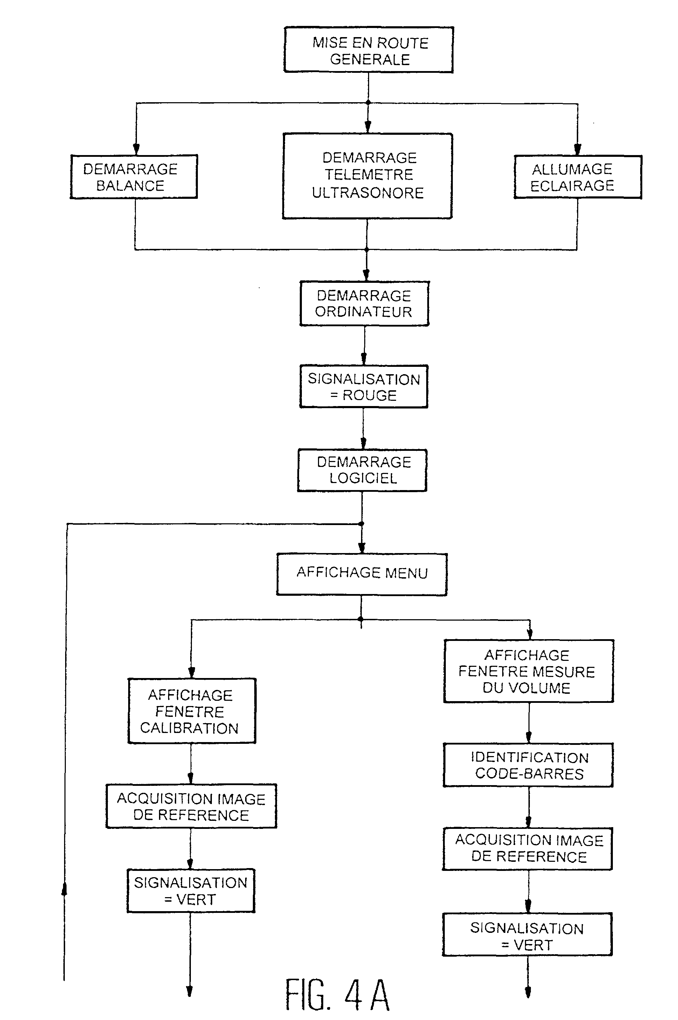

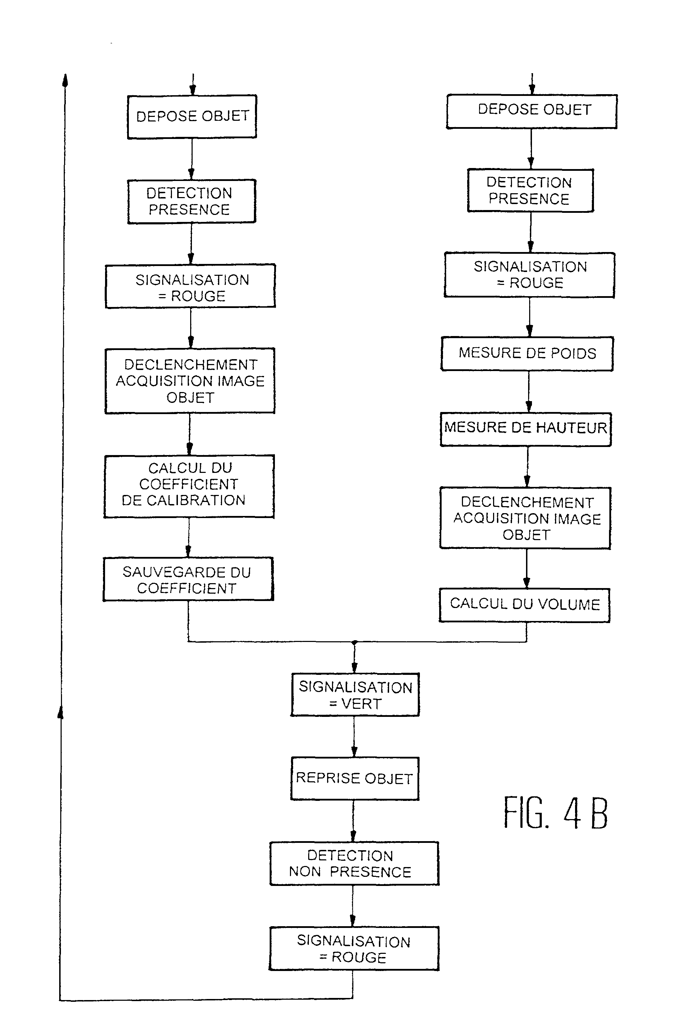

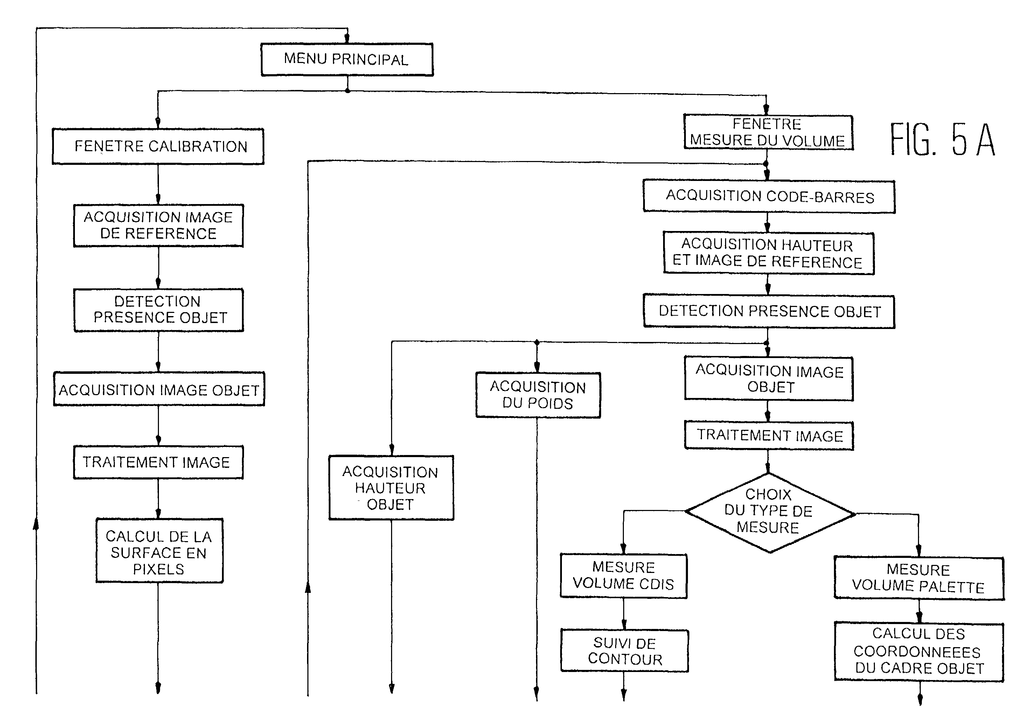

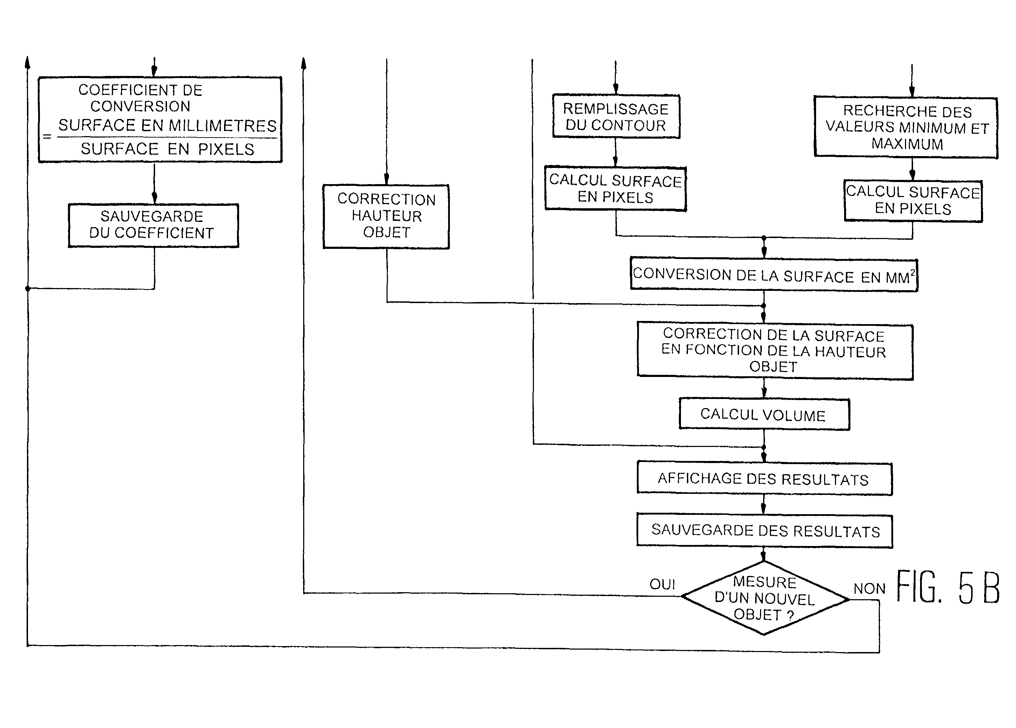

Un organigramme du fonctionnement du système de l'invention est donné sur les figures 4 et 5.

A la mise en route du système, l'opérateur procède à un étalonnage. Le système est alors en état de marche.

L'opérateur positionne alors l'objet destiné à être mesuré sur le plateau de la balance.

Il suit alors les indications de l'organe de traitement. Un signal sonore et un message peuvent indiquer à l'opérateur de saisir le code-barres s'il existe, par exemple à l'aide d'un crayon optique.

Dans une autre configuration de type multiposte, comme illustré sur la figure 3, on dispose d'une unité centrale 16 déportée à laquelle on peut connecter de deux à quatre ensembles de mesure 9, 25, 26, 27. Les liaisons s'effectuent par l'intermédiaire d'une carte de communication. Les caméras se connectent directement à la carte d'acquisition vidéo. La distance maximale entre l'unité centrale et un ensemble de mesure est de 150 mètres. Les liaisons représentées en traits pleins sont de type RS232 ; les liaisons représentées en tiretés sont de type liaison spécialisée ; et, les liaisons représentées en traits discontinus sont de type RS422.

L'unité centrale possède les mêmes équipements que dans la configuration monoposte, avec en plus :

- un écran ;
- un clavier ;
- une souris ;
- une carte de communication, avec 16 liaisons RS422.

Le système de l'invention présente également les caractéristiques suivantes :

• *Liaisons internes et externes*

Quelle que soit la configuration, monoposte ou multiposte, le système informatique du système de l'invention est capable de se connecter au système informatique de l'utilisateur (en particulier de type AS400) soit par l'intermédiaire d'un modem (liaison Transpac), soit par l'intermédiaire d'une carte Ethernet (réseau local).

Le modem peut être aussi utilisé pour la télémaintenance. Il s'agit d'une maintenance à distance par liaison téléphonique qui permet de régler les problèmes logiciels en prenant le contrôle de l'unité centrale de l'utilisateur.

• *Configuration logicielle*

Elle est commune aux deux configurations. Elle comprend par exemple :

- le système d'exploitation WINDOWS® NT 4.0 ;
- la bibliothèque de fonctions MIL utilisée par la carte de type MATROX METEOR™ ;
- le logiciel de communication de type PC ANYWHERE™ (PC ANYWHERE™ est une marque de Symantec Corporation) (pour la télémaintenance) ;

- le logiciel développé en langage de programmation BORLAND C/C++ qui gère l'ensemble du système ; il intègre sous une interface graphique la gestion d'une base de données (de type PARADOX, ORACLE, DBASE, ACCESS, ....), la mise en oeuvre de la calibration du système et la gestion du cycle de mesures.

Le système de l'invention n'est pas figé. Il est tout à fait possible de le faire évoluer pour s'adapter aux besoins de l'utilisateur (par exemple par ajout d'une fonctionnalité, par modification de l'interface graphique pour afficher un masque de saisie écran).
Pour une mise en oeuvre du système de l'invention on a les caractéristiques suivantes :

• *Poids de l'objet*

Le poids maximum et la précision de mesure dépendent de la balance utilisée. Tout type de balance peut être connecté au système à la seule condition qu'elle dispose d'une ligne de communication RS232. Cette condition est remplie par la plupart des balances du commerce.
A titre d'exemple, lors d'essais réalisés, on a utilisé deux balances de type METLER TOLEDO/Spider 3 000 (poids maximum = 3 tonnes ; précision = 1 kg) et de type PCC 150 (poids maximum = 150 kg ; précision = 50 g).

• *Dimensions de l'objet*

Longueur maximum = 2,5 mètres.
Largeur maximum = 2 mètres.
hauteur maximum = 2,5 mètres.
Volume maximum =long_max $\times$ Larg_max $\times$ Haut_max = 2,5$\times$2$\times$2,5 = 12,5 m3.

• *Encombrement de l'objet*

Il est calculé en fonction des cotes maximales à mesurer. Le système de l'invention s'adapte donc aux besoins de chaque utilisateur.
Pour les cotes maximales citées ci-dessus, l'ensemble de mesure (caméra 13 + télémètre ultrasonore 12) doit être placé sur un support de 1,9 mètres de long, situé à 6,5 mètres du sol. La zone au sol à réserver pour les mesures (zone de mesure 11) est alors de 4,6 $\times$ 3,8 m. Cette zone est matérialisée par un rectangle par exemple peint en noir et délimité par un cadre jaune. Elle n'est réservée que lors d'une mesure, c'est-à-dire que toute circulation est possible dans cette zone tant qu'un cycle de mesure n'est pas démarré.
Pour des cotes maximales de 1,4 m x 1,4 m x 2 m (L$\times$1$\times$H), le support de 1,45 mètres de long doit être placé à 5 mètres de haut. La zone de mesure est de 2,9 x 2,9 m.

• *Mesure de la hauteur*

La mesure de hauteur s'effectue à l'aide d'un télémètre ultrasonore par exemple de type MILLTRONICS. Celui-ci est composé d'un transducteur de type XPS-10 et d'un boîtier de commande de type MINIRANGER PLUS. Les caractéristiques techniques de ces deux composants sont données dans les documents référencés [3] et [4].
Les données de hauteur en sortie du boîtier de commande sont comprises entre 4 et 20 mA. Ces données sont converties en volt (valeurs comprises entre 2 et 10 volts) afin d'être récupérées par la carte d'acquisition de données analogiques par exemple de type AXIOM 5411. L'équation de conversion des volts en millimètres est donnée par le calcul suivant :

$$x = 2\ V \rightarrow H = 0\ mm$$

$$x = 10\ V \rightarrow H = Hmax$$

Hmax est la hauteur maximale des objets à mesurer ; cette valeur est intégrée à l'intérieur du boîtier de commande du télémètre.
L'équation de conversion est une équation linéaire du type : H = a.x + b.
La résolution de cette équation donne la solution suivante :

$$H = (Hmax/8).x + (Hmax/4)$$

$$Hmax = 2500 \text{ mm} ; H = 312,5.x + 625 \text{ (mm)}.$$

La précision de la conversion est fonction du codage numérique et de la hauteur Hmax. En effet, les données numériques sont codées sur 12 bits, soit $2^{12}$ = 4096 données. Dans la carte d'acquisition de données analogiques, la plage de mesure en volt est comprise entre -10 V et +10 V. La précision en tension est alors de 20/4096 = 4,88 mV. La précision de conversion des données en mm est donc :

$P_H$ = (Hmax/8).(20/4096)
PH = (5/8192) .Hmax
Hmax = 2 500 mm ; $P_H$ = 1,5 mm.

Pour l'utilisation considérée, le télémètre est réglé pour obtenir directement la hauteur de l'objet. Ce réglage s'effectue en fixant, dans le boîtier de commande, la hauteur entre le télémètre et le sol. Lorsqu'il n'y a pas d'objet dans la zone de mesure, le télémètre doit renvoyer une valeur nulle. Malgré un bon réglage, la valeur ne reste jamais nulle du fait des changements de température et du comportement interne du télémètre. Elle oscille de quelques millimètres autour de zéro. C'est pourquoi on effectue au début de chaque cycle de mesure, une mesure de la hauteur sans objet appelée hauteur de référence (Hréf). La hauteur brut de l'objet est appelée hauteur mesurée (Hmes). Le calcul de la correction de hauteur consiste donc à calculer la hauteur réelle de l'objet qui est : Hréelle = Hmes - Hréf.

Des exemples de mesure sont donnés dans le tableau suivant :

| 4590898 (code-barres) | poids = 6 kg ; hauteur = 0,74 m ; volume = 0,217 m3 longueur = 0,49 m ; largeur = 0,60 m ; rapport = 0,17 |
|---|---|
| n°1 1750288 | poids = 2 kg ; hauteur = 0,35 m ; volume = 0,855 m3 longueur = 0,71 m ; largeur = 0,22 m rapport = 0,22 |
| n°2 4590898 | poids = 56 kg ; hauteur = 1,32 m ; volume = 1,414 m3 longueur = 1,05 m ; largeur = 1,02 m rapport = 0,2 |
| de 1 à 2 | poids total = 58 kg ; volume total = 1,469 m3 |

Le « rapport » est un « rapport poids/volume » utilisé par les entreprises de fret aérien pour la facturation du transport. Il est basé sur la correspondance 6 dm3 $\leftrightarrow$ 1 kg.

Il existe deux modes de calcul du volume :

-    un mode LONGUEUR, qui permet de mesurer la longueur et la largeur de l'objet, en plus de sa hauteur, avec un temps de calcul de quelques secondes ;
-    un mode SURFACE, où seule la surface et la hauteur de l'objet sont accessibles, mais pour lequel le calcul est pratiquement instantané.

Dans le cas où l'objet est une palette constituée, le système de l'invention permet de soustraire du volume d'une palette, le volume de son support pour ne conserver que la partie utile. Ceci s'effectue en sélectionnant le type du support palette à partir d'une liste déroulante. En fin de calcul, son volume connu est soustrait du volume total.

Ces fonctionnalités sont accessibles à partir de l'interface graphique ou par l'intermédiaire de touches de fonction.

La fonction principale du système de l'invention est de fournir les caractéristiques dimensionnelles d'un objet volumineux. Ces caractéristiques enrichissent un fichier qui est utilisé ultérieurement.

Une base de données, par exemple ASCII ou compatible Microsoft®, peut être renseignée soit automatiquement par le système de l'invention, soit manuellement par l'opérateur. Elle est utilisée pour extraire des informations en vue de compléter d'autres bases sur d'autres sites, ou pour utiliser un logiciel d'optimisation de rangement dans les magasins. Ce logiciel peut ne pas être sur la machine de mesure. Le moyen de transport de l'information peut alors être une disquette ou le réseau (le protocole d'échange est très varié et peut être déterminé au cas par cas). Cette base de données est transformable pour assurer un transfert vers d'autres systèmes.

Les données à saisir lors de la mise en oeuvre du système de l'invention sont simples et se réduisent pour la plupart à une lettre. Aucune compétence particulière en informatique n'est nécessaire. L'archivage des données, par exemple sur disquettes, est guidé par l'organe de traitement.

Les valeurs ainsi mesurées sont archivées sur un disque dur par le système.

Un accès à une base de données est possible, l'environnement de travail étant sous windows NT.

L'application permet ainsi :

- de précharger une base de données contenant l'ensemble du fichier objets. Chaque enregistrement au format ASCII comprend notamment :

    . l'identifiant informatique de l'objet (adresse disque),
    . l'identifiant professionnel de l'objet (code-barres),
    . son libellé,
    . les trois dimensions de l'objet ;

- de saisir, à partir d'un lecteur code-barres (émulation clavier) ou du clavier, l'identifiant de l'objet ;
- d'afficher, après la saisie, l'enregistrement correspondant à l'objet qui a été identifié ;
- de mesurer un objet ;
- d'extraire les informations mises à jour dans la base de données sur une disquette.

Les valeurs ainsi mesurées sont archivées sur le disque dur, puis tranférées sur disquettes à la demande de l'opérateur.

L'interface homme-machine peut être très simple et très conviviale (utilisation de personnels divers non qualifiés).

Les liaisons avec les autres organes de traitement se font :

- par échange de bases de données (ajout, modification, suppression..) par disquette ou réseau ;
- par édition d'un listing en fonction de critères simples (marques, types, produits, dimensions..) .

REFERENCES

[1] FR-A-2 672 119
[2] FR-A-2 720 155
[3] Manuel d'instructions Miniranger Plus de Milltronics, PL-515-1, PRR1.2, décembre 1996 ;
[4] Manuel d'instructions séries XPS/XCT, PL-521-1, PRP 1.1, janvier 1997

**Revendications**

1. Système de mesure des caractéristiques d'un objet volumineux comprenant

    - au moins un ensemble de mesure (9) constitué de :

        . une balance de pesée (10) munie d'un plateau horizontal, disposée dans une zone de mesure,
        . un télémètre ultrasonore (12) et une caméra (13) fixés sur un support, dirigés vers l'espace situé au-dessus du plateau de la balance,
        . une unité de signalisation (15) du mode fonctionnement ;

    - un organe de traitement (16) relié à ces différents éléments et à au moins un organe d'entrée d'informations et à au moins un organe de visualisation, **caractérisé**

    **en ce que** la balance (10) est encastrée dans le sol ; et en ce que le support (14) est un rail sur lequel est fixée une platine supportant la caméra (13) et le télémètre ultrasonore (12), qui peut se déplacer sur le rail.

2. Système selon la revendication 1 comprenant, dans chaque ensemble de mesure, un boîtier interface (18), disposé entre, d'une part, l'organe de traitement (16) et, d'autre part, la balance (10), le télémètre ultrasonore (12), et l'unité de signalisation (15), et qui permet de piloter ces trois éléments (10, 12, 15).

**3.** Système selon la revendication 2 comprenant, dans chaque ensemble de mesure, un afficheur (17) avec touches de fonction auquel sont connectés un lecteur code-barres (19) et une imprimante (21).

**4.** Système selon la revendication 3 comprenant, dans chaque ensemble de mesure, une télécommande pour déclencher les mesures.

**Patentansprüche**

**1.** System zur Messung der Charakteristika eines voluminösen Gegenstandes, umfassend :

-   mindestens eine Messvorrichtung (9), bestehend aus:

    -   einer in einem Messbereich angeordneten, mit einer horizontalen Platte ausgerüsteten Waage (10),
    -   einem Ultraschallentfernungsmessgerät (12) und einer Kamera (13), die auf einer Halterung befestigt und auf den Raum über der Waageplatte gelegen sind,
    -   einer Signalisierungseinheit (15) für den Betriebsmodus;

-   ein an diese verschiedenen Bauteile, an mindestens ein Informationseingabeelement und an mindestens ein Visualisierungselement angeschlossenes Verarbeitungselement (16),

    **dadurch gekennzeichnet, dass** die Waage (10) in den Boden eingebettet ist; und dass die Halterung (14) eine Schiene ist, auf der eine die Kamera (13) haltende Platte und das auf der Schiene verschiebbare Ultraschallentfernungsmessgerät (12) befestigt ist.

**2.** System nach Anspruch 1, umfassend in jeder Messvorrichtung:

    ein Schnittstellengehäuse (18), das einerseits zwischen dem Verarbeitungselement (16) und andererseits der Waage (10) angeordnet ist,
    das Ultraschallentfernungsmessgerät (12),
    und die Signalisierungseinheit (15)
    und das es erlaubt, diese drei Bauteile (10, 12, 15) zu steuern.

**3.** System nach Anspruch 2, umfassend in jeder Messvorrichtung:

    eine Anzeige (17) mit Funktionstasten, an die ein Balkencodeleser (19) und ein Drucker (21) angeschlossen sind.

**4.** System nach Anspruch 3, umfassend in jeder Messvorrichtung:

    eine Fernbedienung zur Auslösung der Messungen.

**Claims**

**1.** System for measuring the characteristics of a voluminous object, comprising

-   at least one measurement assembly (9) consisting of:

    -   a weighing balance (10) furnished with a horizontal platform, and disposed in a measurement zone,
    -   an ultrasound telemeter (12) and a camera (13) which are fixed on a support, and are directed towards the space situated above the platform of the balance,
    -   an operating mode signalling unit (15);

-   a processing facility (16) linked to these various elements and to at least one information input facility and to at least one display facility, **characterized in that** the balance (10) is sunk into the floor; and **in that** the support (14) is a rail on which is fixed a stage supporting the camera (13) and the ultrasound telemeter (12), which can move on the rail.

2. System according to Claim 1 comprising, in each measurement assembly, an interface box (18), disposed between, on the one hand, the processing facility (16) and, on the other hand, the balance (10), the ultrasound telemeter (12), and the signalling unit (15), and which makes it possible to control these three elements (10, 12, 15).

3. System according to Claim 2 comprising, in each measurement assembly, a display (17) with function keys, to which are connected a bar code reader (19) and a printer (21).

4. System according to Claim 3 comprising, in each measurement assembly, a remote control for triggering the measurements.

FIG. 1

FIG. 2

FIG. 3

FIG. 4 A

DEPOSE OBJET

DETECTION PRESENCE

SIGNALISATION = ROUGE

DECLENCHEMENT ACQUISITION IMAGE OBJET

CALCUL DU COEFFICIENT DE CALIBRATION

SAUVEGARDE DU COEFFICIENT

DEPOSE OBJET

DETECTION PRESENCE

SIGNALISATION = ROUGE

MESURE DE POIDS

MESURE DE HAUTEUR

DECLENCHEMENT ACQUISITION IMAGE OBJET

CALCUL DU VOLUME

SIGNALISATION = VERT

REPRISE OBJET

DETECTION NON PRESENCE

SIGNALISATION = ROUGE

FIG. 4 B

MENU PRINCIPAL

FENETRE CALIBRATION

FENETRE MESURE DU VOLUME

FIG. 5 A

ACQUISITION IMAGE DE REFERENCE

ACQUISITION CODE-BARRES

DETECTION PRESENCE OBJET

ACQUISITION HAUTEUR ET IMAGE DE REFERENCE

ACQUISITION IMAGE OBJET

DETECTION PRESENCE OBJET

TRAITEMENT IMAGE

ACQUISITION DU POIDS

ACQUISITION IMAGE OBJET

CALCUL DE LA SURFACE EN PIXELS

ACQUISITION HAUTEUR OBJET

TRAITEMENT IMAGE

CHOIX DU TYPE DE MESURE

MESURE VOLUME CDIS

MESURE VOLUME PALETTE

SUIVI DE CONTOUR

CALCUL DES COORDONNEEES DU CADRE OBJET

COEFFICIENT DE
CONVERSION
$$= \frac{\text{SURFACE EN MILLIMETRES}}{\text{SURFACE EN PIXELS}}$$

SAUVEGARDE
DU COEFFICIENT

CORRECTION
HAUTEUR
OBJET

REMPLISSAGE
DU CONTOUR

CALCUL SURFACE
EN PIXELS

RECHERCHE DES
VALEURS MINIMUM ET
MAXIMUM

CALCUL SURFACE
EN PIXELS

CONVERSION DE LA SURFACE EN MM$^2$

CORRECTION DE LA SURFACE
EN FONCTION DE LA HAUTEUR
OBJET

CALCUL VOLUME

AFFICHAGE DES RESULTATS

SAUVEGARDE DES RESULTATS

OUI ─ MESURE
D'UN NOUVEL
OBJET ? ─ NON

FIG. 5 B